# EUROPEAN PATENT APPLICATION

(11) **EP 1 589 458 A1**
(43) Date of publication of application: **26.10.2005**
(21) Application number: 05103081.5
(22) Date of filing: 18.04.2005
(51) Int. Cl.: G06F 17/60

(54) **Business-to business (B2B) buyer organization administration**

(30) Priority: 20.04.2004 CA 2465003
(71) Applicant: International Business Machines Corporation, Armonk, N.Y. 10504 (US)
(72) Inventor: PHILIP, Wesley, c/o IBM United Kingdom Limited, Winchester, Hampshire SO21 2JN (GB); KHUSIAL, Darshanand, c/o IBM United Kingdom Lted., Winchester, Hampshire SO21 2JN (GB); MIRLAS, Lev, c/o IBM United Kingdom Limited, Winchester, Hampshire SO21 2JN (GB); MCKEGNEY, Ross, c/o IBM United Kingdom Limited, Winchester, Hampshire SO21 2JN (GB)
(74) Representative: Williams, Julian David

(57) **Abstract**

A method, system and apparatus for administrating a buyer organization in a B2B e-commerce host computing platform. In the method of the invention, a relationship chain can be established between an instance of a partner organization, an instance of a buyer organization, and at least one administrative user of the instance of the partner organization. Consequently, the administrative user can be permitted to administer the instance of the buyer organization based upon the relationship chain without requiring the at least one administrative user to explicitly register with the instance of the buyer organization.

## Description

### Technical field

The present invention relates to e-commerce systems deployment and more particularly to buyer organization administration in e-commerce computing systems.

### Background art

Business to Business (B2B) interactions relate to the inter-commercial transactions conducted between business entities to facilitate the individual operations of the business entities. Examples of B2B interactions include vendor relationships involving the purchase and supply of goods and service to other businesses in the business to consumer chain. In this regard, B2B interactions represent the core element of commerce activity that far exceeds that of end-user sales of goods and services from businesses to consumers. Accordingly, given the volume of B2B interactions today, automated computing has formed the foundation of the conduct of accelerated and efficient interactions between business computing systems to engage in B2B transactions.

In a B2B e-commerce environment, there are frequently multiple sellers, referred to as "partner organizations" which can be hosted in a single, computing platform. The partner organizations each can own virtual stores which can be accessed by external entities to conduct e-commerce transactions. Buyers, referred to as "buyer organizations" can access one or more of the virtual stores maintained by the partner organizations in the host environment in that a representative from a buyer organization first can "join" the e-commerce site by registering at one of the virtual stores. Subsequently, if the registration is approved by an administrator from the selected partner organization, the buyer organization can be created in the host environment and its users can conduct electronic business transactions with that selected partner organization.

The hosting of partner and buyer organizations in a single hosted computing platform can facilitate B2B interactions. In addition to the ease of inter-organizational communications within the single hosted computing platform, the partner and buyer organizations further can share resources efficiently so as to conserve the use of processing logic. Moreover, the single hosted computing platform facilitates the implementation of managed hosting environments in which a third party can host instances of partner organizations and buyer organizations without requiring either to bear the burden of maintaining the computing environment.

Notably, in a single host platform B2B e-commerce environment, multiple buyer organizations can register with a single partner organization so that the virtual stores of the partner organization can have many different buyers. Similarly, a buyer organization can register with multiple partner organizations so that a buyer can purchase goods and services from multiple sources. In either case, it can be desirable to administer the registered buyer organizations through partner administrators associated with corresponding partner organizations so as to monitor and limit the interactions as between the virtual stores and the registered buyer organizations.

Presently, to manage the interactions of individual buyer organizations in the e-commerce system, separate administrative relationships must be defined for partner administrators for each buyer organization separately registered with a corresponding partner organization. Where multiple buyer organizations enjoy registrations with one or more partner organizations, however, managing the roles as between the partner organizations and the buyer organizations can become cumbersome. In fact, whenever a relationship between a partner administrator and a buyer organization changes, so too must the defined role. As single host platform B2B e-commerce environments become more complex and prevalent in which many buyer organizations can interact with many different partner organizations, the present administrative process will scale poorly and will become an impediment to the success of the e-commerce environment.

### Disclosure of the invention

In accordance with the present invention, there is now provided a system for buyer organization management in a business to business (B2B) e-commerce host computing platform, the system comprising: logic defining a partner organization; logic defining a buyer organization from which buyer organization instances can be registered with selected instances of said partner organizations; and, a registration processor configured to establish an administrative relationship between administrative users of said selected instances of said partner organizations and registering ones of said buyer organization instances.

The system may further comprise access control logic configured to manage requests to access resources in the B2B e-commerce host computing platform based upon established relationships between said administrative users, said partner organization instances, and said buyer organization instances. Similarly, the system, may further comprise a table configured to store said administrative relationship. The table may comprise at least one record associating an instance of a buyer organization with an instance of a partner organization. Such a table may further comprise at least one record specifying an administrative partner for said instance of said partner organization. Similarly, the table may comprise: at least one record associating an instance of a buyer organization with a group of buyer organizations; and, at least one additional record associating an instance of a partner organization with said group. Such a table may further comprise at least one record specifying an administrative partner for said instance of said partner organization.

Viewing the present invention from another aspect, there is now provided a method for administrating a buyer organization in a business to business (B2B) e-commerce host computing platform, the method comprising the steps of: establishing a relationship chain between an instance of a partner organization, an instance of a buyer organization, and at least one administrative user of said instance of said partner organization; and, permitting said at least one administrative user to administer said instance of said buyer organization based upon said relationship chain without requiring said at least one administrative user to explicitly register with said instance of said buyer organization.

The establishing step may comprise the steps of: creating an instance of said partner organization; specifying said at least one administrative user for said instance of said partner organization; creating said instance of a buyer organization; and, registering said instance of said buyer organization with said instance of said partner organization. Similarly, the establishing step may further comprise the step of persisting said relationship chain in a table. The registering step may further comprise the step of persisting a relationship between said instance of said buyer organization and said instance of said partner organization in a table. Similarly, the registering step may further comprise the steps of: persisting a relationship between said instance of said buyer organization and a group of said instances of said partner organization in a table; and, further persisting a relationship between said group and said instance of said partner organization in said table. The method may further comprise the steps of: de-registering said instance of said buyer organization from said instance of said partner organization; and, terminating administrative permission for said at least one administrative user to administer said instance of said buyer organization based upon said de-registration without requiring said at least one administrative user to explicitly de-register from said instance of said buyer organization. Similarly, the method may further comprise the steps of: revoking an administrative role in said instance of said partner organization for a selected administrative user; and, denying access to said selected administrative user to administer said instance of said buyer organization. The method may further comprise the steps of: adding a new instance of said buyer organization to said group; and, further permitting said at least one administrative user to administer said new instance of said buyer organization without first requiring said at least one administrative user to explicitly register with said new instance of said buyer organization. The method may further comprise the step of registering users of said instance of said buyer organization with said instance of said partner organization without first requiring said users of said instance to explicitly register with said instance of said partner organization. The method may further comprise the step of registering new users of said instance of said buyer organization with said instance of said partner organization without first requiring said new users of said instance to explicitly register with said instance of said partner organization.

The present invention further extends to a machine readable storage having stored thereon a computer program for administrating a buyer organization in a business to business (B2B) e-commerce host computing platform, the computer program comprising a routine set of instructions which when executed by a machine causes the machine to perform the steps of: establishing a relationship chain between an instance of a partner organization, an instance of a buyer organization, and at least one administrative user of said instance of said partner organization; and, permitting said at least one administrative user to administer said instance of said buyer organization based upon said relationship chain without requiring said at least one administrative user to explicitly register with said instance of said buyer organization.

A preferred embodiment of the present invention addresses the deficiencies of the art in respect to host organization administration and provides a novel and non-obvious method, system and apparatus for B2B buyer organization administration in a host computing platform. In a method for administrating a buyer organization in a B2B e-commerce host computing platform, a relationship chain can be established between an instance of a partner organization, an instance of a buyer organization, and at least one administrative user of the instance of the partner organization. Consequently, the administrative user can be permitted to administer the instance of the buyer organization based upon the relationship chain without requiring the at least one administrative user to explicitly register with the instance of the buyer organization.

The establishing step can include creating an instance of the partner organization; specifying the administrative user for the instance of the partner organization; creating the instance of a buyer organization; and, registering the instance of the buyer organization with the instance of the partner organization. In a preferred aspect of the invention, the instance of the buyer organization can be de-registered from the instance of the partner organization; and, the administrative permission for the administrative user to administer the instance of the buyer organization can be terminated based upon the de-registration without requiring the at least one administrative user to explicitly de-register from the instance of the buyer organization.

Preferably, a new instance of the buyer organization can be added to the group of buyer organizations; and, the administrative user can be permitted to administer the new instance of the buyer organization without first requiring the at least one administrative user to explicitly register with the new instance of the buyer organization. Similarly, users of the instance of the buyer organization can be registered with the instance of the partner organization without first requiring the users of the instance to explicitly register with the instance of the partner organization. Finally, new users of the instance of the buyer organization can be registered with the instance of the partner organization without first requiring the new users of the instance to explicitly register with the instance of the partner organization.

The establishing step further can include the step of persisting the relationship chain in a table. The registering step, by comparison, further can include the step of persisting a relationship between the instance of the buyer organization and the instance of the partner organization in a table. Alternatively, the registering step further can include the steps of persisting a relationship between the instance of the buyer organization and a group of the instances of the partner organization in a table; and, further persisting a relationship between the group and the instance of the partner organization in the table.

In a particularly preferred embodiment of the present invention, there is provide a system for buyer organization management in a B2B e-commerce host computing platform including both logic defining a partner organization and logic defining a buyer organization from which buyer organization instances can be registered with selected instances of the partner organizations. The system further can include a registration processor configured to establish an administrative relationship between administrative users of the selected instances of the partner organizations and registering ones of the buyer organization instances.

In a preferred aspect of the invention, access control logic can be configured to manage requests to access resources in the B2B e-commerce host computing platform based upon established relationships between the administrative users, the partner organization instances, and the buyer organization instances. The system further can include a table configured to store the administrative relationship. In one aspect of the invention, the table can include at least one record associating an instance of a buyer organization with an instance of a partner organization. In another aspect of the invention, the table can include at least one record associating an instance of a buyer organization with a group of buyer organizations; and, at least one additional record associating an instance of a partner organization with the group. In yet another aspect of the invention, the table further can include at least one record specifying an administrative partner for the instance of the partner organization.

Additional aspects of the invention will be set forth in part in the description which follows, and in part will be apparent from the description, or may be learned by practice of the invention. The aspects of the invention will be realized and attained by means of the elements and combinations particularly pointed out in the appended claims. It is to be understood that both the foregoing general description and the following detailed description are exemplary and explanatory only and are not restrictive of the invention, as claimed.

### Brief description of the drawings

The accompanying drawings, which are incorporated in and constitute part of this specification, illustrate embodiments of the invention and together with the description, serve to explain the principles of the invention. The embodiments illustrated herein are presently preferred, it being understood, however, that the invention is not limited to the precise arrangements and instrumentalities shown, wherein:

Figure 1 is a schematic illustration of an e-commerce host computing platform configured for buyer organization administration in accordance with the present invention;

Figure 2 is a hierarchical diagram of a buyer organization administration system;

Figure 3 is a flow chart illustrating a process for registering buyer organizations for buyer organization administration in the system of Figure 2; and,

Figure 4 is a flow chart illustrating a process for administering a registered buyer organization in the system of Figure 2.

### Best mode for carrying out the invention

The present invention is a method, system and apparatus for buyer organization administration in a host computing platform. In accordance with the present invention, buying organizations in an e-commerce system hosted within the host computing platform can register with and de-register from selling organizations, referred to as partner organizations. Based upon the registration of the buying organizations, administrators of the partner organizations can become implicitly configured to administer the buying organizations. Yet, partner administrators for the partner organizations cannot administer a buying organization where the buying organization lacks a relationship with the partner organization.

Once approved for registration by the partner organizations, existing buyers of the buying organizations can become registered with the partner organizations without requiring additional approval by the partner organizations. Likewise, new buyers of the buying organizations can register with the partner organizations without requiring additional approval by the partner organizations. In this way, access rights to buying organizations can be efficiently administered in group fashion, without requiring the micromanagement of administrative privileges for each relationship between a buying organization and a selling organization.

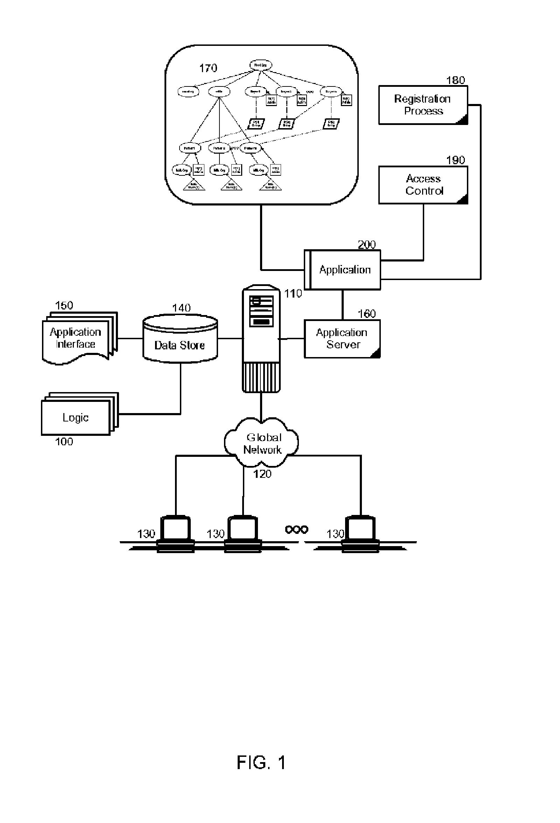

In more particular illustration of the present invention, Figure 1 is a schematic illustration of an e-commerce host computing platform configured for buyer organization administration. The e-commerce host computing platform can include a content server 110 configured for coupling to content processing clients 130 over a global computer communications network 120. The content server 110 can include data storage 140 which can store defined logic 100 and associated interface definitions 150 for supporting e-commerce transactions with the content processing clients 130. In particular, the defined logic 100 can be business transactions logic in which sellers among partner organization instances can conduct e-commerce transactions with buyers among buyer organization instances. To that end, an application server 160 can be disposed within or in association with the content server 110 for executing the defined logic 100 and for facilitating the rendering of the application interface 150 to the defined logic 100.

Notably, an e-commerce systems architecture 170 can be defined for an application 200 operating in the application server 160 within the content server 110. The application 200 can include both application logic 100 and an application interface 150 that can be persisted within the data store 140. The e-commerce systems architecture 170 can provide for multiple, different instances of partner organizations and multiple, different instances of buying organizations interacting with the partner organizations. Instances of the partner organizations can provide access to goods or services for registered buyer organization instances hosted in the content server 110. To that end, a registration process 180 can be coupled to the application 200 and configured to facilitate the registration of a buyer organization instance with a corresponding partner organization.

Administrative users of the partner organizations can manage the interactions between buyer organizations which enjoy relationships with respective ones of the partner organizations. In particular, where a relationship has been established between a buyer organization and a partner organization, an administrative user of the partner organization can administer the buyer organization. The administrative user, however, cannot administer other buyer organizations which do not enjoy a relationship with an associated partner organization. To manage the process of administrating a buyer organization, the system of the present invention also can include an access control processor 190 coupled to the application 200.

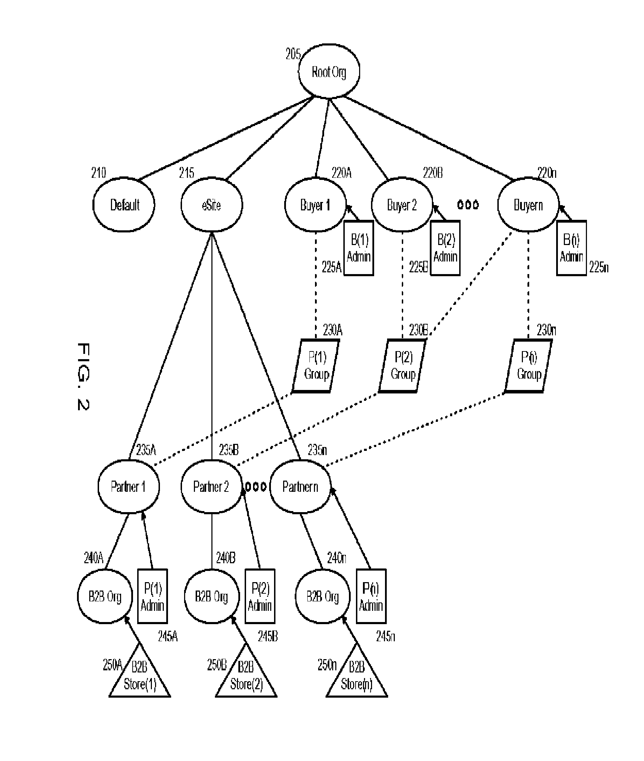

Based upon the architecture 170 of Figure 1, given a B2B e-commerce site deployed for operation with both buyers and sellers, a relationship between buyers and sellers can be configured such that the seller enjoys administrative rights over the buyers registered with the seller. In more particular illustration, Figure 2 is a hierarchical diagram of a buyer organization administration system for use in the e-commerce computing platform of Figure 1. The system of Figure 2 can include a hierarchy of buyer organizations 220A, 220B, 220n and partner organizations 235A, 235B, 235n descending from a root organization 205. The system also can include a default organization 210.

Preferably, while the buyer organizations 220A, 220B, 220n can descend directly from the root organization 205, the partner organizations 235A, 235B, 235n can descend from the root organization 205 through a common e-commerce site community organization 215. Each of the partner organizations 235A, 235B, 235n can include at least one B2B organization 240A, 240B, 240n deployed to present a B2B virtual store front 250A, 250B, 250n. Additionally, each partner organization 235A, 235B, 235n can include at least one designated administrative user 245A, 245B, 245n. The administrative user 245A, 245B, 245n can be empowered logically to administer registered ones of the buyer organizations 220A, 220B, 220n.

Importantly, each of the buyer organizations 220A, 220B, 220n can register with at least one of the partner organizations 235A, 235B, 235n so that the buyer organizations 220A, 220B, 220n can engage in transactions through the B2B virtual store fronts 250A, 250B, 250n. In the course of registering the buyer organizations 220A, 220B, 220n, a relationship reference can be noted in a table as between the registering one of the buyer organizations 220A, 220B, 220n and the registered one of the partner organizations 235A, 235B, 235n. In this way, by querying the table, registered ones of the buyer organizations 220A, 220B, 220n can be treated as a group of buyer organizations 220A, 220B, 220n. In this regard, Figure 2 depicts exemplary groupings 230A, 230B, 230n of the buyer organizations 220A, 220B, 220n.

In accordance with the present invention, several administrative users 245A, 245B, 245n in a partner organization 235A, 235B, 235n can manage buyer organizations 220A, 220B, 220n that have registered with the partner organization 235A, 235B, 235n. The number of such administrators 245A, 245B, 245n need not be limited as each of the partner organizations 235A, 235B, 235n can create as many administrators 245A, 245B, 245n as required. Still, the administrators 245A, 245B, 245n cannot manage or maintain an awareness of any of the buyer organizations 220A, 220B, 220n that have not registered with a corresponding one of the partner organizations 235A, 235B, 235n, though the buyer organizations 220A, 220B, 220n may have registered with others of the partner organizations 235A, 235B, 235n.

Furthermore, the administrative role granted to the partner administrators 245A, 245B, 245n can be revoked selectively for individual ones of the partner administrators 245A, 245B,245n. The selective revocation can result in the inability of the individual ones of the partner administrators 245A, 245B, 245n to administer the buyer organizations 220A, 220B, 220n applicable to the revocation. The individual revocation of an administrative role, however, will not result in the revocation of administrative rights for others of the partner administrators 245A, 245B, 245n. In any case, any of the buyer organizations 220A, 220B, 220n which have registered with one of the partner organizations 235A, 235B, 235n can subsequently register with additional ones of the partner organizations 235A, 235B, 235n.

When a new one of the buyer organizations 220A, 220B, 220n registers with a particular one of the partner organizations 235A, 235B, 235n, any existing administrative user 245A, 245B, 245n of the particular one of the partner organizations 235A, 235B, 235n can manage the new one of the buyer organizations 220A, 220B, 220n, without requiring a separate registration process. Moreover, once one of the buyer organizations 220A, 220B, 220n has been registered with one of the partner organizations 235A, 235B, 235n, additional users from the registered one of the buyer organizations 220A, 220B, 220n can register individually with the partner organization 235A, 235B, 235n on behalf of the registered one of the buyer organizations 220A, 220B, 220C.

Nevertheless, a user associated with a buyer organization 220A, 220B, 220n can only register with a partner organization 235A, 235B, 235n if the associated buyer organization 220A, 220B, 220n has previously registered with the partner organization 235A, 235B, 235n. Conversely, once a buyer organization 220A, 220B, 220n has been registered with a partner organization 235A, 235B, 235n, existing users from the buyer organization 220A, 220B, 220n can become registered with the partner organization 235A, 235B, 235n.

Importantly, the foregoing architecture 170 addresses several deficiencies of known e-commerce systems. For example, the architecture provides for the efficient administration of access rights in that partner administrators can be efficiently granted administrative access to perform actions on a group of buyer organizations without requiring a separate granting of access for each buyer organization in the group. Also, administrative access to a group of organizations can be delegated to other administrative partners in a partner organization without requiring a separate establishment of an administrative relationship.

Additionally, if the relationship between a partner organization and buyer organization becomes terminated, access to the buyer organization by the partner administrators associated with the terminated partner organization also can be terminated. The termination of the partner administrators can be performed automatically without requiring a separate disassociation for each partner administrator. More importantly, the relationship between the partner administrators and the buyer organization can be terminated when the underlying relationship between the buyer organization and the partner organizations dissolves, thereby avoiding orphaned administrative relationships.

Thus, as it will be apparent to the skilled artisan from a review of the hierarchy of Figure 2, in accordance with the present invention, a chain of relationships between partner administrator and partner organization, and partner organization and buyer organization, can be leveraged so that an administrator in a partner organization can gain access to a group of buyer organizations. As a result, administrative partners can be efficiently granted administrative access to the buyer organizations in the chain of relationships to perform actions on a grouping of buyer organizations in the chain of relationships: Based upon the chain of relationships, each administrative partner can indirectly enjoy access to buyer organizations associated with those partner organizations with which the administrative partner enjoys a relationship.

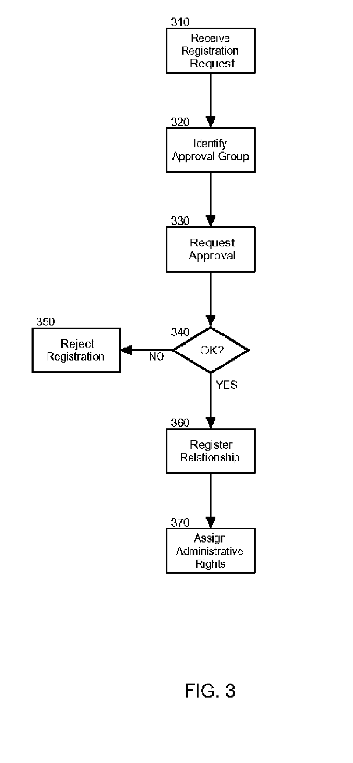

In a preferred aspect of the present invention, the relationships between partner organizations and buyer organizations can be mutually established through a registration process. In this regard, Figure 3 is a flow chart illustrating a process for registering buyer organizations for buyer organization administration in the system of Figure 2. Beginning in block 310, a registration request can be received such that a buyer organization requests registration with a partner organization to conduct transactions with the partner organization. In response to receiving the request, in block 320 each administrative partner for the partner organization can be identified. Subsequently, in block 330 the identified administrative partners can be consulted to determine whether to approve the request.

In decision block 340, if the administrative partners decline to approve the request, in block 350 the registration request can be rejected. Otherwise, in block 360 the relationship can be registered as between the buyer organization and the partner organization. More particularly, the relationship can be registered as a "Registered Customer" relationship. In a preferred aspect of the invention, the relationship can be memorialized in a table. In any case, in block 370, administrative rights in the registered buyer organization are implicitly assigned to those partner administrators associated with the partner organization. Additionally, to the extent that the buyer organization is to be added to a group of buyer organizations, an entry in a table of groups can be added associating the added buyer organization with the group (and, similarly the partner organization with the group).

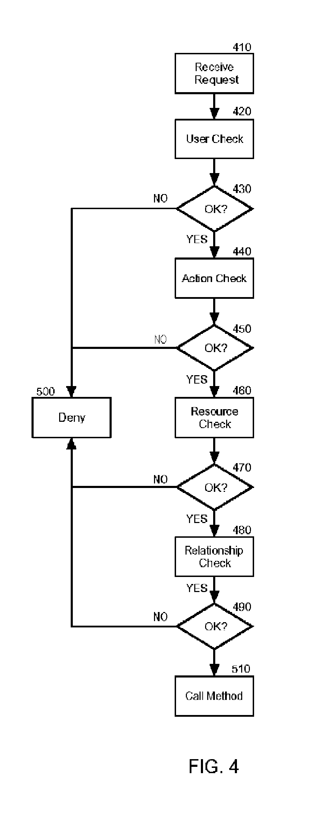

Once registered, the buyer organization can be administered by the administrative partners of associated partner organizations. Figure 4 is a flow chart illustrating a process for administering a registered buyer organization in the system of Figure 2. Beginning in block 410, a request can be received to access a resource. In block 420, a user check can be performed based upon the request. A user check can include determining if the requestor enjoys an administrative role with a partner organization. In decision block 430, the user check fails, in block 500 the request can be denied. Otherwise, the process can continue to block 440.

In block 440, an action check further can be performed based upon the request. An action check can include ensuring that the requestor attempts to perform an action permitted under the role assigned to the administrative partner. If, in block 450, the action check fails, in block 500 the request can be denied. Otherwise, the process can continue to block 460. In block 460, a resource check can be performed. A resource check can include ensuring that the buyer organization subject to the request is a valid instance of an organization. If, in decision block 470 the resource check fails, in block 500 the request can be denied. Otherwise, the process can continue to block 480.

In block 480, a relationship check can be performed. The relationship check can include ensuring that the requisite relationship exists between the buyer organization and the partner organization for which the requestor plays a role. Preferably, the table of relationships can be traversed to locate a record indicating that the partner organization enjoys such a relationship. If, in decision block 490 the relationship check fails, in block 500 the request can be denied. Otherwise, the process can continue to block 510. In block 510, the requested action can be performed upon the buyer organization.

The present invention can be realized in hardware, software, or a combination of hardware and software. An implementation of the method and system of the present invention can be realized in a centralized fashion in one computer system, or in a distributed fashion where different elements are spread across several interconnected computer systems. Any kind of computer system, or other apparatus adapted for carrying out the methods described herein, is suited to perform the functions described herein.

A typical combination of hardware and software could be a general purpose computer system with a computer program that, when being loaded and executed, controls the computer system such that it carries out the methods described herein. The present invention can also be embedded in a computer program product, which comprises all the features enabling the implementation of the methods described herein, and which, when loaded in a computer system is able to carry out these methods.

Computer program or application in the present context means any expression, in any language, code or notation, of a set of instructions intended to cause a system having an information processing capability to perform a particular function either directly or after either or both of the following a) conversion to another language, code or notation; b) reproduction in a different material form. Significantly, this invention can be embodied in other specific forms without departing from the spirit or essential attributes thereof, and accordingly, reference should be had to the following claims, rather than to the foregoing specification, as indicating the scope of the invention.

## Claims

1. A method for administrating a buyer organization in a business to business (B2B) e-commerce host computing platform, the method comprising the steps of: establishing a relationship chain between an instance of a partner organization, an instance of a buyer organization, and at least one administrative user of said instance of said partner organization; and, permitting said at least one administrative user to administer said instance of said buyer organization based upon said relationship chain without requiring said at least one administrative user to explicitly register with said instance of said buyer organization.

2. The method of claim 1, wherein said establishing step comprises the steps of: creating an instance of said partner organization; specifying said at least one administrative user for said instance of said partner organization; creating said instance of a buyer organization; and, registering said instance of said buyer organization with said instance of said partner organization.

3. The method of claim 1, wherein said establishing step further comprises the step of persisting said relationship chain in a table.

4. The method of claim 2, wherein said registering step further comprises the step of persisting a relationship between said instance of said buyer organization and said instance of said partner organization in a table.

5. The method of claim 4, wherein said registering step further comprises the steps of: persisting a relationship between said instance of said buyer organization and a group of said instances of said partner organization in a table; and, further persisting a relationship between said group and said instance of said partner organization in said table.

6. The method of claim 2, further comprising the steps of: de-registering said instance of said buyer organization from said instance of said partner organization; and, terminating administrative permission for said at least one administrative user to administer said instance of said buyer organization based upon said de-registration without requiring said at least one administrative user to explicitly de-register from said instance of said buyer organization.

7. The method of claim 2, further comprising the steps of: revoking an administrative role in said instance of said partner organization for a selected administrative user; and, denying access to said selected administrative user to administer said instance of said buyer organization.

8. The method of claim 5, further comprising the steps of: adding a new instance of said buyer organization to said group; and, further permitting said at least one administrative user to administer said new instance of said buyer organization without first requiring said at least one administrative user to explicitly register with said new instance of said buyer organization.

9. The method of claim 1, further comprising the step of registering users of said instance of said buyer organization with said instance of said partner organization without first requiring said users of said instance to explicitly register with said instance of said partner organization.

10. A machine readable storage having stored thereon a computer program for administrating a buyer organization in a business to business (B2B) e-commerce host computing platform, the computer program comprising a routine set of instructions which when executed by a machine causes the machine to perform the steps of a method as claimed in any preceding claim.

11. A system for buyer organization management in a business to business (B2B) e-commerce host computing platform, the system comprising: logic defining a partner organization; logic defining a buyer organization from which buyer organization instances can be registered with selected instances of said partner organizations; and, a registration processor configured to establish an administrative relationship between administrative users of said selected instances of said partner organizations and registering ones of said buyer organization instances.

12. The system of claim 11, further comprising access control logic configured to manage requests to access resources in the B2B e-commerce host computing platform based upon established relationships between said administrative users, said partner organization instances, and said buyer organization instances.

13. The system of claim 11, further comprising a table configured to store said administrative relationship.

14. The system of claim 13, wherein said table comprises at least one record associating an instance of a buyer organization with an instance of a partner organization.

15. The system of claim 13, wherein said table comprises: at least one record associating an instance of a buyer organization with a group of buyer organizations; and, at least one additional record associating an instance of a partner organization with said group.

16. The system of claim 14 or claim 15, wherein said table further comprises at least one record specifying an administrative partner for said instance of said partner organization.
